# EUROPEAN PATENT APPLICATION

(11) **EP 2 757 434 A2**
(43) Date of publication of application: **23.07.2014**
(21) Application number: 14151797.9
(22) Date of filing: 20.01.2014
(51) Int. Cl.: G05D 23/19, F24F 11/00

(54) **User interface screens for zoned HVAC systems, a controller employing the screens and a method of operating a zoned HVAC system**

(30) Priority: 21.01.2013 US 201361754932 P; 30.08.2013 US 201314015384
(71) Applicant: Lennox Industries Inc., Richardson, TX 75080 (US)
(72) Inventor: Difulgentiz III, Robert Anthony, Richardson, TX 75080 (US); Charavda, Jay, Carrollton, TX 75006 (US); Pavlak, Thomas Gerard, Commerce Township, MI 48382 (US); Golden, Kyle, Richardson, TX 75080 (US); Castillo, Daniel, Carrollton, TX 75006 (US)
(74) Representative: Williams, David John

(57) **Abstract**

A controller for a zoned HVAC system and interface screens for controlling a zoned HVAC system are disclosed herein. In one embodiment, the controller includes: (1) a processor configured to direct operation of the HVAC system according to operating data for zones thereof and (2) a display configured to provide a zone dashboard screen including a zone information area for each of the zones, wherein each the zone information area has a defined shape and is configured to provide operating data for a single one of the zones and receive a user input that selects the single one of the zones for the processor to control.

## Description

### CROSS-REFERENCE TO RELATED APPLICATION

This application claims the benefit of U.S. Provisional Application Serial No. 61/754,932, filed by Charavda, et al., on January 21, 2013, entitled "USER INTERFACE SCREENS AND CONTROLLER FOR HVAC SYSTEM," commonly assigned with this application and incorporated herein by reference.

### TECHNICAL FIELD

This application is directed, in general, to heating, ventilating and air conditioning (HVAC) systems and, more specifically, to zoned HVAC systems.

### BACKGROUND

HVAC systems are used to regulate environmental condition within an enclosed space. Typically, HVAC systems have a circulation fan that pulls air from the enclosed space through ducts and pushes the air back into the enclosed space through additional ducts after conditioning the air (e.g., heating, cooling, humidifying or dehumidifying the air). To direct operations of HVAC components including a circulation fan, each HVAC system includes at least one HVAC controller. Some HVAC systems are zoned systems wherein a HVAC controller can direct the flow of conditioned air for each of the zones of the HVAC system.

### SUMMARY

In one aspect, the disclosure provides a controller for a zoned HVAC system. In one embodiment, the controller includes: (1) a processor configured to direct operation of the HVAC system according to operating data for zones thereof and (2) a display configured to provide a zone dashboard screen including a zone information area for each of the zones, wherein each the zone information area has a defined shape and is configured to provide operating data for a single one of the zones and receive a user input that selects the single one of the zones for the processor to control.

In another aspect, a computer program product having a series of operating instruction stored on a non-transitory computer readable medium that directs operation of a processor when initiated thereby to provide interface screens on a display for interacting with a zoned HVAC system is disclosed. In one embodiment, the interface screens include a zone dashboard screen having zone information areas for zones of the HVAC system, wherein each one of the zone information areas has a defined shape, is configured to provide operating data therein for a single one of the zones and is configured to receive a user input invoking a home page screen for the single one of the zones.

In yet another aspect, a graphical user interface for a zoned HVAC system is disclosed. In one embodiment, the graphical user interface includes: (1) zone identifiers that textually identify different zones of the zoned HVAC system and (2) zone information areas for the zones of the zoned HVAC system, wherein each one of the zone information areas has a defined shape, is configured to provide operating data therein for a single one of the zones and is configured to receive a user input invoking a home page screen for the single one of the zones.

### BRIEF DESCRIPTION

Reference is now made to the following descriptions taken in conjunction with the accompanying drawings, in which:
FIG. 1 is a high-level block diagram of an embodiment of a HVAC system constructed according to the principles of the disclosure;
FIG. 2 is a block diagram of an embodiment of a controller constructed according to the principles of the disclosure;
FIG. 3 illustrates an example of a first embodiment of a zone dashboard screen constructed according to the principles of the disclosure;
FIG. 4 illustrates an example of a second embodiment of a zone dashboard screen constructed according to the principles of the disclosure;
FIG. 5 illustrates an example of a first embodiment of a zone home page screen constructed according to the principles of the disclosure;
FIG. 6 illustrates an example of a second embodiment of a zone home page screen constructed according to the principles of the disclosure;
FIG. 7 illustrates an example of a third embodiment of a zone home page screen constructed according to the principles of the disclosure; and
FIG. 8 illustrates a flow diagram of an embodiment of a method of operating a zoned HVAC system carried out according to the principles of the disclosure.

### DETAILED DESCRIPTION

Controlling and coordinating each of the individual zones of a zoned HVAC system can be cumbersome. This disclosure provides user interface screens that allow a user to view the settings for multiple zones of a zoned HVAC system on a single screen. The single user interface screen, referred to herein as a zone dashboard screen, also allows a user to select one of the displayed zones to obtain further information and control thereof.

As such, the disclosure also provides interface screens, disclosed herein as zone home page screens, which are directed to a single one of the multiple zones selectable from the zone dashboard screen. From the zone home page screens, a user can view the current environmental indoor and outdoor information for that zone, the operating set points for the zone and the operating status for the zone. Additionally, a user can change the operating set points for the zone.

The disclosed interface zoning screens allow a user to advantageously monitor and modify the temperature and set points for each individual zone of a zoned HVAC system. Instead of a menu driven system, the zoning interface screens are designed according to an application paradigm that is used in such non-HVAC devices as smart phones and tablets. For example, from a home page in a zoned HVAC system, a user can view the current temperature of the zones of the zoned HVAC system by simply scrolling left or right. If the user would like to see all of the zones at once, the user can invoke the zone dashboard screen. From the zone dashboard screen, the user can view the current temperature, cool to set point and heat to set point for each of the zones of a zoned HVAC system. The interface zoning screens can be employed by or on HVAC components such as a thermostat, an environmental sensor, a zone controller, etc. Additionally, the interface zoning screens can be employed in mobile non-HVAC devices. A mobile non-HVAC device as used herein is a device having a primary function that is not associated with HVAC systems. For example, non-HVAC devices include mobile computing devices that are configured to interact with zoned HVAC systems. Mobile computing devices can be mobile telephones (including smart phones), tablets, game devices, etc., that include at least one processor, memory and display. One skilled in the art will also understand that the mobile computing devices disclosed herein include other components that are typically included in such devices including a power supply, communications interface, etc.

The disclosed features and schemes provide an improved interface mechanism for informing users and receiving inputs to change operating parameters for each of the various zones of a zoned HVAC system. The interface zoning screens allow a user to make changes to the various zones that are saved or stored immediately from the perspective of the user. As such, a user can make changes that are stored in real time and ready for implementation. Additionally, each of the interface zoning screens provide a similar look and feel regardless of the implementation such that a user is familiar with the operation thereof whether employed directly on a HVAC controller or employed on a non-HVAC device. Turning now to the figures that provide illustrated embodiments of the features.

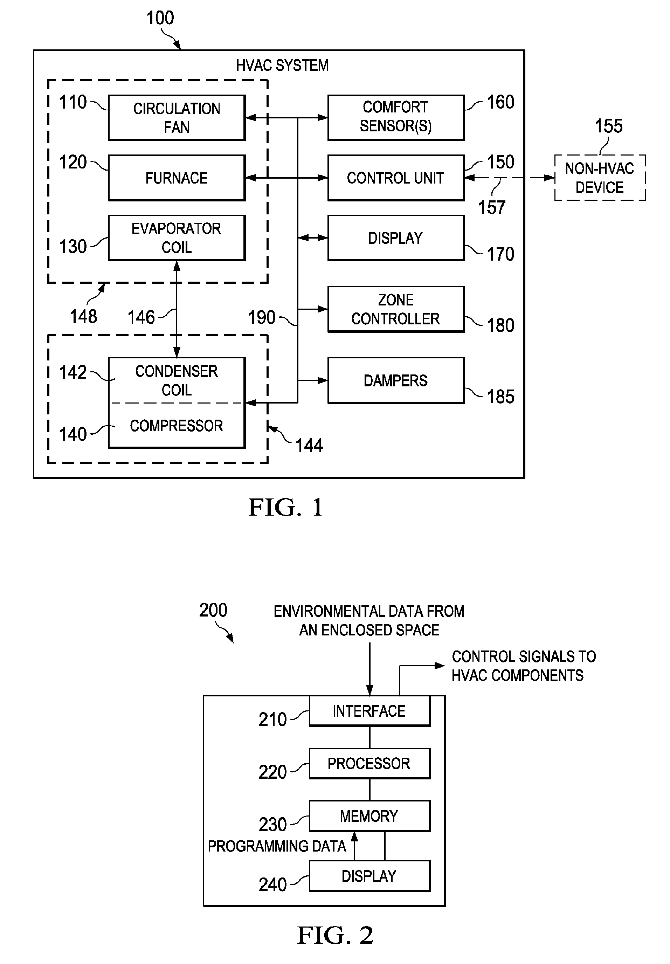

FIG. 1 is a high-level block diagram of an embodiment of a HVAC system 100, constructed according to the principles of the disclosure. The HVAC system 100 is a networked HVAC system configured to condition air within an enclosed space, such as a house, an office building, a warehouse, etc. The HVAC system 100 includes multiple components with a single one of some of the components in FIG. 1 being represented. One skilled in the art will understand that multiple of the same components can be included. One skilled in the art will also understand the HVAC system 100 can include other components that are not illustrated but typically included with an HVAC system.

The HVAC system 100 is a zoned system. As such, multiple comfort sensors 160 and dampers 185 are denoted. The HVAC system 100 also includes a circulation fan 110, a furnace 120, typically associated with the circulation fan 110, and a refrigerant evaporator coil 130, also typically associated with the circulation fan 110. The circulation fan 110, furnace 120, and refrigerant evaporator coil 130 are collectively referred to as the "indoor unit." This embodiment of the system 100 also includes a compressor 140 and an associated condenser coil 142, which are typically referred to as the "outdoor unit" 144. The compressor 140 and associated condenser coil 142 are typically connected to an associated evaporator coil 130 by a refrigerant line 146.

The circulation fan 110, sometimes referred to as a blower, can operate at different capacities, i.e., motor speeds, to circulate air through the multiple zones of the HVAC system 100, whereby the circulated air is conditioned and supplied to the conditioned enclosed space. The circulation fan 110 moves the air at a certain capacity according to a blower volume that is often expressed in terms of cubic feet per minute, or CFM of the circulating fan 110.

The control unit 150 is configured to control the circulation fan 110, the furnace 120 and/or the compressor 140 to regulate the temperature of the enclosed space. The control unit 150 may be an integrated controller or a distributed controller that directs operation of the HVAC system 100. The control unit 150 may include an interface to receive thermostat calls, blower control signals, and blower volumes for various zones and operating modes of the HVAC system. A thermostat call as used herein is based on an environmental setting such as a temperature or a humidity. The thermostat calls include, for example, heating demands, cooling demands and dehumidifying demands. A thermostat call can be generated by, for example, a thermostat or a comfort sensor.

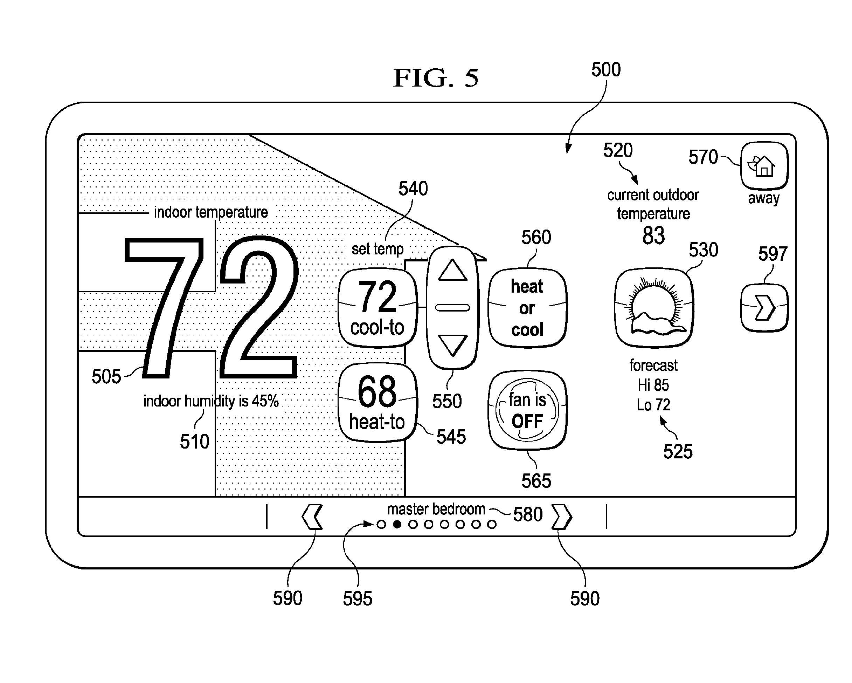

The control unit 150 includes a processor, such as a microprocessor, that is configured to direct operation of the HVAC system 100 according to operating parameters for the various zones of the HVAC system. The operating parameters for a particular zone include a heating set point and a cooling set point for that zone. The heating and cooling set points for each of the zones can be received via a corresponding zone home page screen. FIG. 5 illustrates an embodiment of a zone home page screen that can be employed to receive operating parameters that are used by the processor. The control unit 150 also includes a memory section having a series of operating instructions stored therein that direct the operation of the control unit 150 (e.g., the processor) when initiated thereby. The series of operating instructions may represent algorithms that are used to generate the interface screens disclosed herein.

The HVAC system 100 also includes comfort sensors 160 that may be associated with the control unit 150, zones of the HVAC system 100 and also optionally associated with a display 170. The comfort sensors 160 provide current information, environmental data, about environmental conditions within the zones of the enclosed space, such as temperature, humidity and air quality to the control unit 150 and display 170.

The display 170 is configured to provide a visual interface between a user and the HVAC system 100 including a zone dashboard screen and home page screens. In some embodiments, the display 170 also provides additional functions such as operational, diagnostic and status messages. In some embodiments, the display 170 is a thermostat for the HVAC system 100. In other embodiments, the display 170 is associated with a controller of the HVAC system 100, such as the control unit 150. Herein, the term "user" will be used to refer collectively to any of an installer, a tester, a user, an operator, a repairman, etc., unless clarity is served by greater specificity.

The zone controller 180 is configured to manage the movement of conditioned air to the designated zones of the enclosed space. Each of the designated zones include at least one demand unit, such as the furnace 120, and at least one user interface, such as a thermostat or a comfort sensor. The zone controlled HVAC system 100 allows a user to independently control the environment in the designated zones employing the zone dashboard screen and the zone home page screen disclosed herein. The zone controller 180 operates electronic dampers 185 to control air flow to the zones of the enclosed space. The zone controller 180 generates a blower control signal to request a blower volume for the circulation fan 110. The zone controller 180 can be configured to provide the functionality of a conventional controller for delivering conditioned air to designated zones of a conditioned space. Additionally, the zone controller 180 can be configured to provide the zoning interface screens disclosed herein. Harmony III™ Zone Control System available from Lennox Industries, Inc. of Richardson, Texas, is an example of a zoning system that employs a zone controller to manage the distribution of conditioned air to designated zones.

A data bus 190, which in the illustrated embodiment is a serial bus, couples the various components of the HVAC system 100 together such that data may be communicated therebetween or thereamong. The data bus 190 may be advantageously employed to convey one or more alarm messages or one or more diagnostic messages. In some embodiments, the connections therebetween are through a wired-connection. A conventional cable and contacts may be used to couple the various components together. In some embodiments, a wireless connection may also be employed to provide at least some of the connections. As such, components of the zoned HVAC system 100 can be configured for wireless communication, such as via a wireless local area network (WLAN).

In different embodiments, the control unit 150, the display 170 and the zone controller 180 can be a HVAC controller. As such, either one of the control unit 150, the display 170 or the zone controller 180 can be configured to perform all or a portion of the features described herein. FIG. 2 provides additional information of an embodiment of a controller that can be used to interface with a zoned HVAC system. In some embodiments, a non-HVAC device can communicate with a HVAC controller to monitor and modify at least some of the operating parameters of the zones of a zoned HVAC system. Non-HVAC device 155 represents such a device that communicates with the control unit 150 via a conventional wireless connection 157, such as a WLAN.

FIG. 2 illustrates a block diagram of an embodiment of a controller 200 constructed according to the principles of the disclosure. The controller 200 is configured to provide an interface between a user and a zoned HVAC system allowing the user to direct operations of the zoned HVAC system and receive information therefrom. The controller 200 can be a device or a portion of a device that is a component of a zoned HVAC system. For example, in different embodiments, the controller 200 can be a control unit, a zone controller or a thermostat of a zoned HVAC system. In other embodiments, the controller 200 is a non-HVAC device that is used to interface with a zoned HVAC system. In one embodiment, the controller 200 is wirelessly coupled to a HVAC controller of a zoned HVAC system.

The controller 200 includes an interface 210, a processor 220, a memory 230 and a user display 240. Additionally, the controller 200 may comprise additional components typically included within a controller, such as a power supply or power port.

In one embodiment, each of the components in the controller 200 is operatively coupled to each other via conventional means to communicate information. While all of the components can be contained in one enclosure, in some embodiments, some of these components may be located outside the enclosure while being operatively coupled to other components. Also in some embodiments, a zoned HVAC system has multiple controllers based on the structure or the number of zones of the enclosed space in which the HVAC system is applied.

The interface 210 is a communications interface that is configured to connect to a HVAC device and communicate therebetween. The interface 210 can communicate via a data bus, such as data bus 190 in FIG. 1. For example, the controller 200 can be the zone controller 180 of FIG. 1 and communicate with at least one of the dampers 185 via data bus 190. In another embodiment, the controller 200 can be a non-HVAC device such as the non-HVAC device 155 of FIG. 1. In one embodiment, the interface 210 communicates via a wireless connection such as via a WLAN. For example, the controller 200 can be a non-HVAC device that communicates with the control unit 150 via the wireless connection 157. In this embodiment, the control unit 150 can then communicate via the data bus 190 to direct the operation on a HVAC device per received instructions from the controller 200. In some embodiments, the controller 200 is configured to communicate with HVAC controllers from multiple zoned HVAC systems. For example, interface 210 can be configured in some embodiments to communicate with a HVAC controller of an upstairs zoned HVAC system and a HVAC controller of a downstairs zoned HVAC system. The interface 210 can be a conventional communications interface whether employing a wireless or wired communication path.

In one embodiment, the interface 210 is configured to receive environmental data such as temperature, humidity and etc. from sensors, such as comfort sensors, located throughout the enclosed space and transmit control signals that represent instructions to perform services to the respective HVAC components. In one embodiment, the environmental data and control signals are communicated via a data bus such as the data bus 190 of FIG. 1. In some embodiments, a wireless connection such as a WLAN is also used to communicate with the zoned HVAC system.

The processor 220 of the controller 200 directs the operation of the controller 200 and instructs other HVAC components based on programming data. The programming data includes operation parameters (e.g., temperature setpoints, system modes, fan modes) for each of the zones of the zoned HVAC system. The programming data can be input via the display 240 employing home page screens for the various zones. The processor 220 may be a conventional processor such as a microprocessor. In one embodiment, the processor 220 is a processor of a mobile computing device, including a mobile communication device such as a smartphone.

The memory 230 may be a conventional memory typically located within the controller that is constructed to store the programming data. The memory 230 may store operating instructions to direct the operation of the processor 220 when initiated thereby. The operating instructions can correspond to algorithms that provide the functionality of the zoning interface screens disclosed herein.

The display 240 is configured to allow interaction with a user by visually providing information to a user and receiving user inputs. In one embodiment, the display 240 can provide a zone dashboard screen and a home page screen for the different zones. The zone dashboard screen includes zone information areas that provide operating data for corresponding zones and receive user inputs that select a single one of the zones for the processor to direct operations thereof. The operating data includes operating parameters such as heating and cooling sets points and also environmental data such as the current temperature. Each home page screen is configured to receive inputs for adjusting at least some of the operating data for a corresponding single zone.

For example, a user can change the set points for the different zones by employing a set point changer of a zone home page screen. The set point changer and other input areas of the disclosed interface screens initiate an action when activated. In some embodiments, the input areas can be activated when touched or pressed. In other embodiments a user input device, such as a keypad, touchpad, stylus pen, etc., can be used to activate an input area such as the set point changer. Activation of the input areas of the zoning interface screens can be determined based on the type of display in which the graphical user interface screens are employed.

In addition to the zoning interface screens disclosed herein, the display 240 can provide other screens such as operational, diagnostic and status message screens.

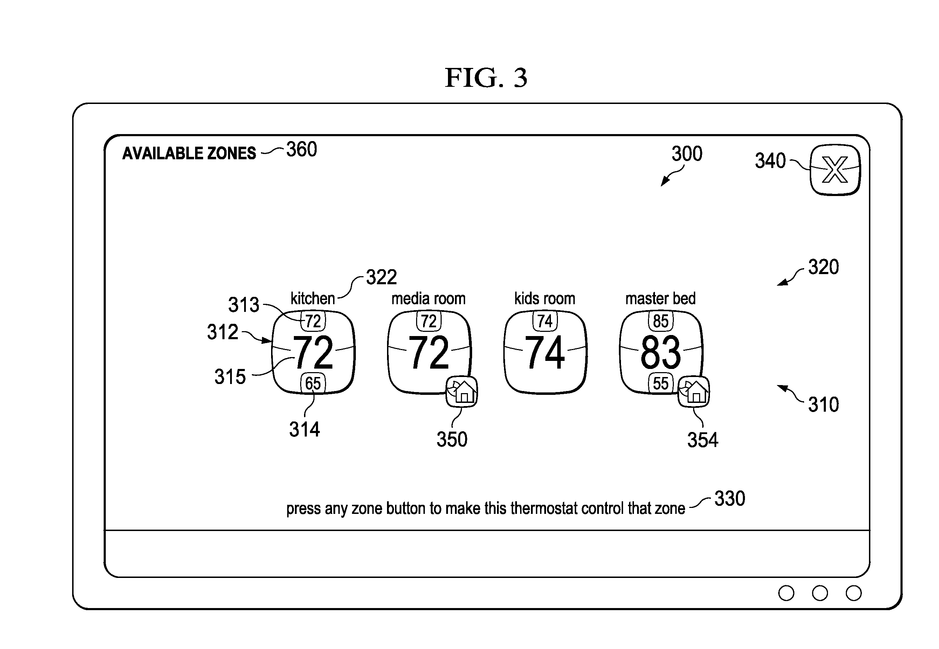

FIG. 3 illustrates a view of an embodiment of a zone dashboard screen 300 constructed according to the principles of the disclosure. The zone dashboard screen 300 is a graphical user interface screen configured to allow a user to view the current temperature and set points for each zone of a corresponding HVAC system.

The zone dashboard screen 300 includes zone information areas, collectively designated 310, and zone identifiers, collectively designated 320, that uniquely correspond to one of the zone information areas. Each of the zone information areas 310 has a defined shape, is configured to provide operating data for a single zone and is configured to receive a user input that selects the single zone to be controlled by a processor. In FIG. 3, the zone information areas 300 each have the same defined shape of a squircle. Consider for example zone information area 312 that has been designated as a representative of the zone information areas 310. Included within the defined shape is a cooling set point 313, a heating set point 314 and a current temperature of the zone 315. In one embodiment, the cooling set point 313 and the heating set point 314 are presented in particular colors that correspond to cooling or heating. In some embodiments, the cooling set point 313 is in blue and the heating set point 314 is in red. Each of the zones can be individually controlled and can be set to different modes including: Heat Only, Cool only, Heat or Cool and Off. If a zone is configured to Heat only, only the heating set point will be shown for that zone. If it is configured to cool only, only the cooling set point will be shown. If it is configured to heat or cool, both the heat and cool set points will be shown. If it is configured to off - then no set points will be shown. As indicated by the corresponding one of the zone identifiers specifically denoted as 322, zone information area 312 is for the kitchen of the enclosed space. Since both the cooling set point 313 and the heating set point 314 are shown, the kitchen zone is set to the heat of cool mode. Other ones of the zone identifiers 320 denote a media room zone, a kids room zone and a master bedroom zone. The zone dashboard screen 300 is configured to allow a user to enter the name for each of the zones and rename the zones. In one embodiment, the zone identifiers 320 can be activated by touch to allow a user to enter a name or rename a zone.

The zone dashboard screen 300 also includes an instructional area 330 and an exit area 340. The instructional area 330 includes directions for operating or interfacing with the zone dashboard screen 300. The exit area 340 is configured to close or exit-out-of the zone dashboard screen 300 in response to a user input thereat. In some embodiments, after exiting out of the zone dashboard screen a HOME screen, such as a thermostat HOME screen is presented. The zone dashboard screen 300 is also configured to indicate which of the various zones of the HVAC system is in an away mode. Away indicators are associated with each particular zone to visually indicate that the particular zone has been placed in an away mode. Away indicators 350, 354, are specifically identified in the zone dashboard screen 300. Away indicator 350 corresponds to zone information area for the media room and away indicator 354 corresponds to zone information area for the master bedroom. Zone dashboard screen 300 also includes a screen title 360 that describes the information provided.

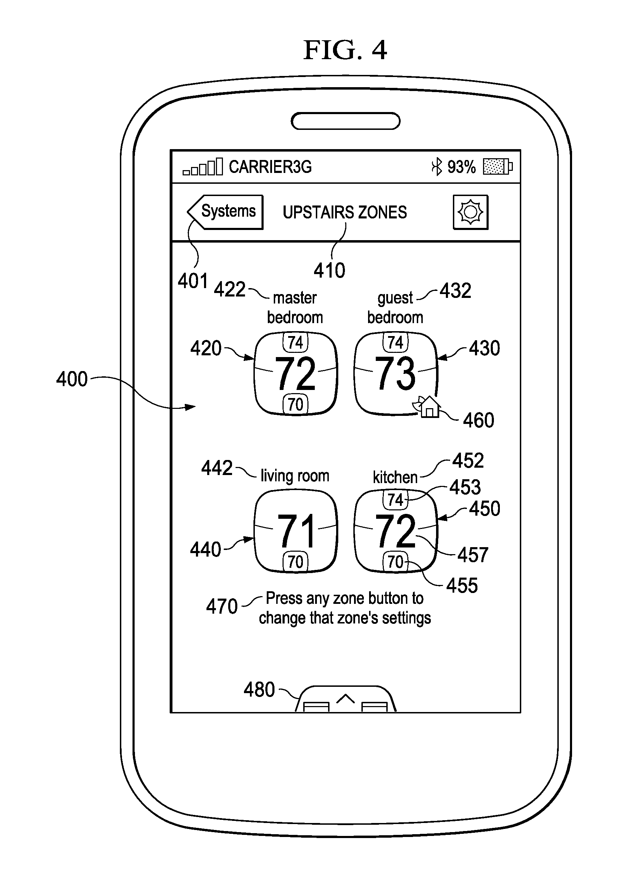

FIG. 4 illustrates an example of a second embodiment of a zone dashboard interface screen 400 constructed according to the principles of the disclosure. As with the zone dashboard screen 300, the zone dashboard interface screen 400 includes zone information areas, zone identifiers, and an instructional area. The zone dashboard screen 400 is specifically formatted for a non-HVAC device including a smart phone, such as an iPhone® by Apple Inc., of Cupertino California. One skilled in the art will understand that the zone dashboard screen 400 can also be employed with or formatted for other type of mobile computing devices.

The zone dashboard interface page screen 400 includes a systems initiator 401 that is used to invoke an HVAC system selection menu. The HVAC system selection menu allows a user to select a particular HVAC system. The zone dashboard screen 400 includes a system identifier 410 that indicates which particular zoned HVAC system is being presented. In FIG. 4, the system identifier indicates that the zone dashboard screen 400 is presently directed to a zoned HVAC system denoted as the "Upstair Zones."

The zoning information areas of the zone dashboard screen 400 are denoted 420, 430, 440 and 450. The corresponding zoning identifiers are denoted 422, 432, 442 and 452, respectively. As with the zoning information areas 310 of FIG. 3, each of the zoning information areas 420, 430, 440 and 450 include operating data. The operating data of zoning information area 430 is specifically denoted as a representation of each of the zoning information areas 420, 430, 440 and 450. The operating data of zoning information area 450 includes the operating set point parameters cooling set point 453 and a heating set point 455, and also current temperature 457. The corresponding zoning identifier 452 indicates the zoning information area 450 is for the kitchen.

As with the zone dashboard screen 300, the zone dashboard screen 400 is also configured to indicate which of the various zones of the zone HVAC system is in an away mode. Associated with the zoning information area 430 is an away mode indicator 460 that operates as the away indicators 350, 354, of FIG. 3.

The zone dashboard screen 400 also includes an instructional area 470 and an exit area 480. The instructional area 470 includes directions for operating or interfacing with the zone dashboard screen 400. The exit area 480 is configured to close or exit-out-of the zone dashboard screen 400 in response to a user input thereat. Unlike the exit area 340 of FIG. 3, the exit area 480 employs the inherent functionality of the display of a non-HVAC device such as a smartphone and is operated by dragging the "arrow" located in the exit area 480. In some embodiments, after exiting from the zone dashboard screen 400 the HOME screen for a mobile HVAC application on a particular device, such as the smartphone, is provided.

FIG. 5 illustrates an example of a first embodiment of a zone home page screen 500 constructed according to the principles of the disclosure. The zone home page screen 500 is the home page screen for a single zone of an HVAC system. The zone home page screen 500 is configured to receive inputs for adjusting at least some of the operating data for the single zone. In one embodiment, the zone home page screen 500 is configured to be employed by a HVAC device, such as an HVAC controller. In some embodiments, the home page interface screen is employed on a thermostat of an HVAC system.

The zone home page screen 500 provides environmental data for inside the selected zone and outside of the enclosed space. For indoor, the zone home page screen 500 provides the current indoor temperature and humidity. For outside, the zone home page screen 500 provides the current outdoor temperature and a forecast for the geographic area that includes the installed location of the zoned HVAC system. The home page screen 500 presents the above noted environmental data using text identified in FIG. 5 as indoor temperature text 505, indoor humidity text 510, outdoor temperature text 520 and forecast text 525. The zone home page screen 500 also includes a visual forecast area 530 that visually represents the daily forecast for the geographic area. The visual forecast area 530, along with other informational areas of the zone home page screen 500, has a defined shape that is a squircle. The forecast information, both visual and textual, can be received from an outside source, such as a weather channel or weather website, via conventional means.

The zone home page screen 500 is also configured to allow a user to change the set points for heating and cooling in the zone. Thus, the zone home page screen 500 includes cooling set point area 540, a heating set point area 545 and a set point changer 550. The set point changer 550 is used to increase or decrease a set point for both heating and cooling. In one embodiment, the set point changer 550 is provided, e.g., illuminated, in response to the cooling set point area 540 or the heating set point area 545 being activated. Thereafter, the user can increase or decrease the applicable set point via the up and down arrows. The zone home page screen 500 is configured to receive a user input to select which one of the set points is to be modified using the set point changer 550. Selection of either set point can be performed when a set point area is touched. For example, a user can touch the cooling set point area 540 to change the current set point of 72 degrees, which is illustrated in the cooling set point area 540. With the cooling set point area 540 selected, the set point changer 550 can then be used to increase or decrease the current 72 degree cool-to temperature by touching the up or down arrows of the set point changer 550. In some embodiments, the zone home page screen 500 identifies if one of the set point areas are presently activated for modification. In one embodiment, identifying is by increasing the illumination of at least the text of the selected set point area.

Continuing the above example, the zone home page screen 500 can then be used to set the heat-to temperature for the zone by receiving an input that selects the heating set point, e.g., touching the heating set point area 545, and then receiving inputs to modify the heating set point via the set point changer 550.

Accordingly, modifying the set points can be performed by touching the designated areas of the set point changer 550 to increase or decrease the respective set points. In some embodiments, the set points increment or decrement at predetermined values, such as one degree, and can scroll through multiple values when an up or down arrow is continuously activated, e.g., continuously pressed.

The zone home page screen 500 also includes a system mode area 560 and a fan mode area 565 that textually indicate the current mode of the zone HVAC system and the operating mode of the HVAC system fan, respectively. In FIG. 5, the system mode area 560 indicates the zoned HVAC system is in a heat or cool mode. Other operating modes can include humidifying and dehumidifying, heat only, cool only, heat or cool and program mode. In some embodiments, each of the various zones of a zoned HVAC system can be controlled by its own program schedule. As such, in at least one embodiment the zone home page screen 500 is configured to indicate if a particular zone is being controlled via a program schedule. The fan mode area 565 indicates that the fan of the zoned HVAC system is currently off. Other operating modes for the fan can include automatic and on.

The zone home page screen 500 also includes an away mode invoker 570, a dashboard invoker 580 and zone page scrollers 590. The away mode invoker 555 is configured to receive an input, e.g., be touched, to invoke the away mode for the particular zone. Accordingly, the zone home page screen 500 is configured to allow a user to set an away mode for a single zone of a zoned HVAC system. As discussed with respect to FIG. 3 and FIG. 4, zone dashboard screens are configured to indicate which zones of a zoned HVAC system have been set in the away mode.

The dashboard invoker 580 is configured to display the zone dashboard screen for the HVAC system in response to receiving a user input. Accordingly, the dashboard invoker 580 is configured to launch the zone dashboard screen that visually provides or shows all of the available zones that can be controlled from the particular controller, e.g., a thermostat, upon which the zone home page screen 500 is being displayed. For the home page screen 500, the dashboard invoker 580 serves the dual purpose of indicating the particular zone that is controlled via the zone home page screen 500. In FIG. 5, the particular zone is the "master bedroom." As such, when the portion of the zone home page screen 500 that includes "master bedroom" is touched, a processor associated with the zone home page screen 500 provides the zone dashboard screen for the zone HVAC system in response to activation of the zone dashboard invoker 580.

The zone page scrollers 590 are configured to initiate changing to a different zone home page screen for another zone of the zoned HVAC system. The zone page scrollers 590 can be used to move forward or backward to the next or preceding home page screen. The position of the present zone home page screen 500 with respect to other screens associated with the HVAC system is reflected in the position indicator 595. The zone home page screen 500 also includes a feature invoker 597 that is configured to receive user input to initiate a FEATURES screen wherein a user can access HVAC parameters and settings, including thermostat parameters and settings.

The zone home page screen 500 does not include a designated "save" button. Instead, changes to the HVAC zone system are stored or saved when input by the user. As such, changes are stored immediately from the perspective of the user.

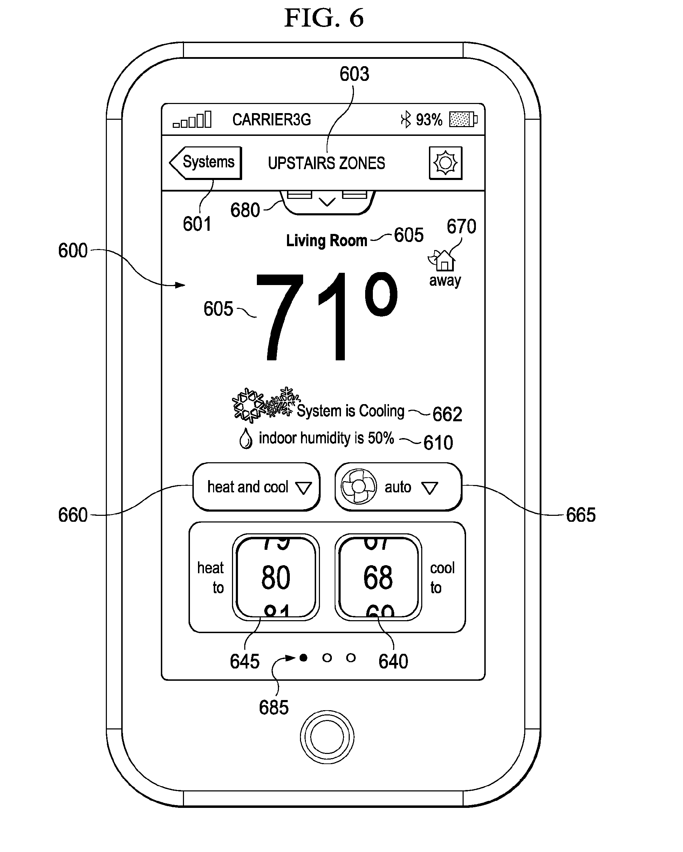

FIG. 6 illustrates an example of a second embodiment of a zone home page screen 600 constructed according to the principles of the disclosure. The zone home page screen 600 includes the functionality of the zone home page screen 500 presented in a format for a non-HVAC device. The zone home page screen 600 is configured for a smart phone such as an iPhone. Since the zone home page screen 600 is configured for a non-HVAC device, the zone home page screen 600 is used to interact with a HVAC controller of a zoned HVAC system to monitor and modify the operating parameters of the multiple zones of a zoned HVAC system.

The zone home page screen 600 includes a systems initiator 601 that is used to invoke an HVAC system selection menu. The HVAC system selection menu, which can also appear when a user logs into a HVAC mobile application on the non-HVAC device, allows a user to select a particular HVAC system, which could be zoned or non-zoned, to control employing the zone home page screen 600. Accordingly, the non-HVAC device in which the zone home page screen 600 is employed is configured to communicate with at least one HVAC controller of each of the zoned HVAC systems that can be selected. The HVAC systems can be within a single enclosed space or even in different enclosed spaces.

The zone home page screen 600 includes a system identifier 603 and a zone identifier 605 to identify the present zoned HVAC system and the zone of that zoned HVAC system that is presently being addressed, e.g., selected via the HVAC system selection menu. In FIG. 6, the current system is the "Upstairs Zones" and the current zone thereof is the "Living Room." The zone home page screen 600 provides environmental data for inside the selected zone using text identified in FIG. 6 as indoor temperature text 605 and text with graphics with indoor humidity condition 610.

The zone home page screen 600 is configured to allow a user to change the set points for heating and cooling in the living room zone. Thus, the zone home page screen 500 includes a cooling set point area 640 and a heating set point area 645. In this embodiment, the respective set points are changed by the user dragging a finger across the temperatures to scroll through until selecting a set point. Accordingly, the zone home page screen 600 employs the touchscreen functionality of "scrolling" that is inherent and well known in devices such as an iPhone.

The zone home page screen 600 also includes a system mode area 660 and a fan mode area 665 that textually indicate the current mode of the zoned HVAC system and the operating mode of the zoned HVAC system fan, respectively. The system mode area 660 can show the currently selected program schedule if the HVAC system is running in program mode. The system mode area 660 and the fan mode area 665 include drop down menus that allow a user to select a particular mode of operation for the denoted zone. Accordingly, a user can employ the zone home page screen 600 to control all of their zones, in all of their HVAC systems, in all of their homes, offices, buildings, etc. In FIG. 6, the system mode area 660 indicates the zoned HVAC system is in a heat or cool mode and the fan mode area 665 indicates that the fan of the zoned HVAC system is set at automatic. An existing operation mode 662 textually and graphically indicates the current operation of the zoned HVAC system with respect to the noted zone, i.e., the Living Room.

The zone home page screen 600 also includes an away mode invoker 670 and a dashboard invoker 680. In this embodiment, scrolling to other home page screens for different zones is achieved by the user dragging their finger across the screen as typically used when scrolling through pages of a smart phone. The position of the current zone home page screen 500 with respect to other screens associated with the zoned HVAC system is reflected in the position indicator 685. The position indicator 685 illustrates that the Living Room home page screen is the first of four home page screens of the Upstairs Zones.

The away mode invoker 655 is configured to receive an input, e.g., be touched, to invoke the away mode for the particular zone. The dashboard invoker 680 is configured to display the zone dashboard screen for the HVAC system in response to receiving a user input, i.e., being dragged across the screen or being touched.

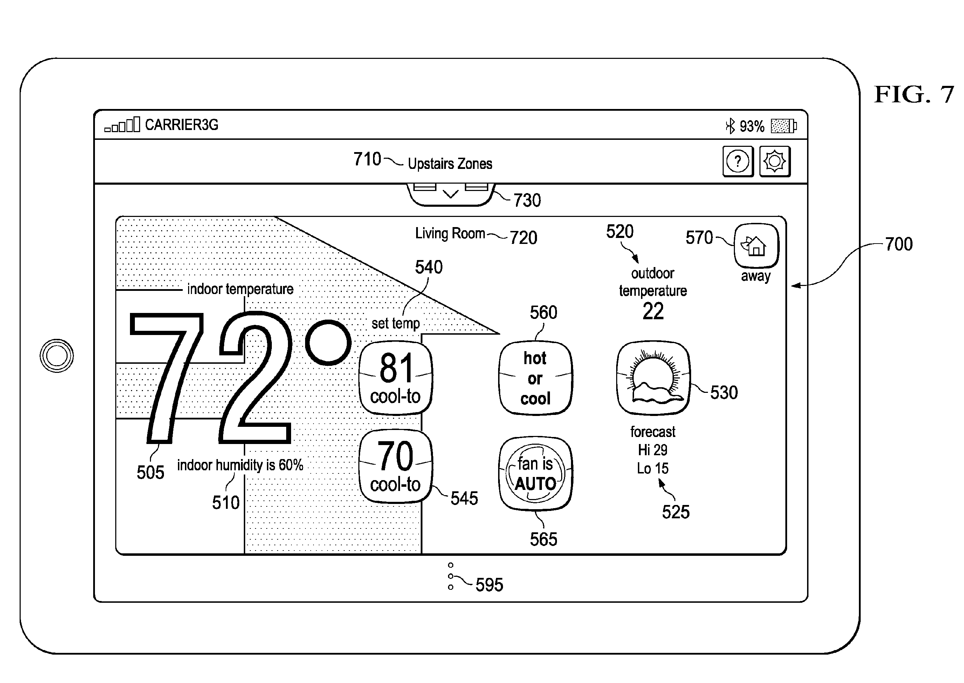

FIG. 7 illustrates an example of a third embodiment of a home page interface screen 700 constructed according to the principles of the disclosure. The zone home page screen 700 includes the functionality of the zone home page screen 500 and can also be employed for monitoring and modifying the operating parameters for multiple zoned HVAC systems. As such, the zone home page screen 700 includes a system identifier 710 and a zone identifier 720.

The zone home page screen 700 is configured for a non-HVAC device, such as an iPad® by Apple Inc. Since the zone home page screen 700 is configured for a non-HVAC device, the zone home page screen 700 is used to interact with a HVAC controller of a zoned HVAC system to monitor and modify the operating parameters of the multiple zones of a zoned HVAC system. The zone home page screen 700 can be used for multiple zoned systems within a single enclosed space or even in different enclosed spaces. Accordingly, the non-HVAC device upon which the zone home page screen 700 is employed is configured to communicate with at least one HVAC controller of each of the zoned HVAC systems. Common components of the zone home page screen 700 with the zone home page screen 500 are denoted by the same element numbers.

The zone home page screen 700 includes a dashboard invoker 730 that is configured to display the zone dashboard screen for the HVAC system in response to receiving a user input. Unlike the dashboard invoker 580, the dashboard invoker 730 does not serve the dual purpose of indicating the particular zone that is being controlled. Instead, the zone identifier 720 is used for this purpose.

Additionally, the zone home page screen 700 does not include zone page scrollers as employed in the zone home page screen 500. Instead, the zone home page screen 700 employs the inherent scrolling function of the display upon which the zone home page screen 700 is employed. As with the zone home page screen 500, the zone home page screen 700 is also configured to provide a set point changer, such as set point changer 550, when one of the set point areas activated.

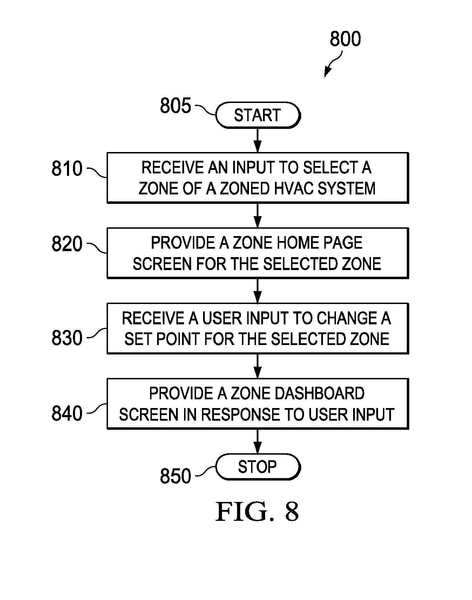

FIG. 8 illustrates a flow diagram of an embodiment of a method 800 of operating a zoned HVAC system carried out according to the principles of the disclosure. At least some of the steps of the method 800 may be carried out by a processor in response to user inputs received via the various interface screens disclosed herein. The method 800 or at least a portion thereof may be implemented as a computer program product stored on a non-transitory computer readable medium. The method 800 begins in a step 805.

In a step 810 an input is received to select a particular zone of the zoned HVAC system. The input can be received employing a zone dashboard screen that is provided via a display associated with a controller. The controller can be a HVAC controller or a non-HVAC device that communicates with a HVAC controller.

In a step 820, a home page screen of the selected zone is provided. The home page screen is provided via the display and can employ the same shapes to define information or action areas as those used in the zone dashboard screen. In one embodiment, the defined shapes are squircles.

A set point for operating the selected zone is changed in response to receiving a user input via the home page screen in a step 830. In a step 840, the zone dashboard screen is provided in response to receiving a user input via the home page screen. The zone dashboard screen can be provided via the display. From the zone dashboard screen another zone can be selected. The method ends in a step 850.

The above-described apparatuses, methods or interface screens may be embodied in, provide by or performed by various conventional digital data processors, microprocessors or computing devices, wherein these devices are programmed or store executable programs of sequences of software instructions to perform one or more of the steps of a method or provide an interface screen. The software instructions of such programs may be encoded in machine-executable form on conventional digital data storage media that is non-transitory, e.g., magnetic or optical disks, random-access memory (RAM), magnetic hard disks, flash memories, and/or read-only memory (ROM), to enable various types of digital data processors or computing devices to perform one, multiple or all of the steps of one or more of the above-described methods or to provide one of the described interface screens. Additionally, an apparatus, such as control unit or a non-HVAC device, may be designed to include the necessary circuitry, programming or computer program product to perform each step of a method disclosed herein or provide a single user interface as disclosed.

Portions of disclosed embodiments may relate to computer storage products with a non-transitory computer-readable medium that have program code thereon for performing various computer-implemented operations that embody a part of an apparatus, system, carry out the steps of a method set forth herein or provide a user interface screen as disclosed. Non-transitory used herein refers to all computer-readable media except for transitory, propagating signals. Examples of non-transitory computer-readable media include, but are not limited to: magnetic media such as hard disks, floppy disks, and magnetic tape; optical media such as CD-ROM disks; magneto-optical media such as floptical disks; and hardware devices that are specially configured to store and execute program code, such as ROM and RAM devices. Examples of program code include both machine code, such as produced by a compiler, and files containing higher level code that may be executed by the computer using an interpreter.

Those skilled in the art to which this application relates will appreciate that other and further additions, deletions, substitutions and modifications may be made to the described embodiments.

## Claims

1. A controller for a zoned HVAC system, comprising:
a processor configured to direct operation of said HVAC system according to operating data for zones thereof; and
a display configured to provide a zone dashboard screen including a zone information area for each of said zones, wherein each said zone information area has a defined shape and is configured to provide operating data for a single one of said zones and receive a user input that selects said single one of said zones for said processor to control.

2. The controller as recited in Claim 1 wherein said processor is further configured to direct said display to provide a home page screen for said single zone in response to receiving said user input, said home page screen configured to receive inputs for adjusting at least some of said operating data for said single zone.

3. The controller as recited in Claim 2 wherein said home page screen is configured to receive an input for an away mode directed only to said single zone.

4. The controller as recited in Claim 3 wherein said operating data includes heating and cooling set points and said processor is configured to direct operation of said single zone based on said heating and cooling set points and a status of said away mode.

5. The controller as recited in Claim 2 wherein said home page screen is further configured to receive a scrolling input and said processor is configured to direct said display to provide a home page screen for another one of said zones in response to said home page screen.

6. The controller as recited in Claim 1 wherein said zone dashboard screen indicates which of said zones is in an away mode.

7. The controller as recited in Claim 1 wherein said zone dashboard screen includes a unique zone identifier that corresponds to said zone information area.

8. The controller as recited in Claim 1 wherein said controller is a non-HVAC component configured to be wirelessly coupled to a control unit of said HVAC system.

9. A computer program product having a series of operating instruction stored on a non-transitory computer readable medium that directs operation of a processor when initiated thereby to provide interface screens on a display for interacting with a zoned HVAC system, said interface screens including a zone dashboard screen comprising:
zone information areas for zones of said HVAC system, wherein each one of said zone information areas has a defined shape, is configured to provide operating data therein for a single one of said zones and is configured to receive a user input invoking a home page screen for said single one of said zones.

10. A graphical user interface for a zoned HVAC system, comprising:
zone identifiers that textually identify different zones of said zoned HVAC system; and
zone information areas for said zones of said zoned HVAC system, wherein each one of said zone information areas has a defined shape, is configured to provide operating data therein for a single one of said zones and is configured to receive a user input invoking a home page screen for said single one of said zones.
